# FASCICULE DE BREVET EUROPEEN

(11) **EP 1 186 490 B1**
(45) Date de publication et mention de la délivrance du brevet: **27.04.2005**
(21) Numéro de dépôt: 01121071.3
(22) Date de dépôt: 03.09.2001
(51) Int. Cl.: B60R 25/04

(54) **Procédé pour sécuriser un système d'accès et/ou de démarrage mains libres pour véhicule automobile**
Verfahren für gesichertes, handfreies Zugangs- und/oder Startsystem in einem Kraftfahrzeug
Secured method for automotive hands-free access and/or starting system

(30) Priorité: 05.09.2000 FR 0011300
(43) Date de publication de la demande: 13.03.2002
(73) Titulaire: VALEO SECURITE HABITACLE S.A.S., 94042 Créteil Cédex (FR)
(72) Inventeur: Moreau, Patricia, 75010 Paris (FR)
(74) Mandataire: Rosolen-Delarue, Katell

(56) Documents cités:
- EP-A- 0 770 749
- US-A- 4 763 121

## Description

L'invention concerne les systèmes d'accès et/ou de démarrage mains libres pour véhicules automobiles selon le preambule de la revendication 1.

De tels systèmes sont généralement connus dans l'état de la technique et ils comprennent une unité de commande installée dans le véhicule et un identifiant portatif apte à communiquer à distance et sans fil avec l'unité de commande pour être authentifié par l'unité de commande. L'identifiant portatif n'est pas particulièrement destiné à être rendu solidaire du véhicule lorsque celui-ci est roulant comme c'est le cas avec une clé de contact mécanique. Dans le cas de prêt de véhicules équipés de tels systèmes d'accès et/ou de démarrage mains libres, notamment pour les sociétés de location de véhicules et les flottes de véhicules d'entreprise, le fait pour un utilisateur d'un véhicule de rendre l'identifiant associé à ce véhicule ne suffit pas à prouver que ce véhicule est à l'arrêt moteur. En effet, le véhicule peut continuer à rouler, moteur tournant, alors que l'identifiant est restitué au propriétaire du véhicule. Dans ce cas, le propriétaire du véhicule n'est pas en mesure de savoir si le vol du véhicule a été commis par le dernier utilisateur du véhicule ou par une tierce personne.

L'objet de l'invention est donc de sécuriser le fonctionnement des systèmes d'accès et/ou de démarrage mains libres pour véhicules automobiles aux fins de limiter les possibilités de fraudes notamment dans les situations indiquées plus haut.

A cet effet, l'invention a pour objet un procédé pour sécuriser un système d'accès et/ou de démarrage mains libres pour un véhicule automobile, le système mains libres comprenant une unité de commande disposée dans le véhicule et un identifiant portatif apte à communiquer à distance et sans fil avec l'unité de commande pour être authentifié par l'unité de commande, caractérisé en ce qu'il consiste à enregistrer une première information dans l'identifiant, via une communication entre l'unité de commande et l'identifiant, en réponse à la détection du démarrage du moteur du véhicule par l'unité de commande, et à enregistrer une seconde information à la place de la première information dans l'identifiant, via une communication entre l'unité de commande et l'identifiant, en réponse à la détection de l'arrêt normal du moteur du véhicule par l'unité de commande.

Par conséquent, avec ce procédé, lors de la restitution de l'identifiant par l'utilisateur, il est possible de savoir si le véhicule a été quitté moteur tournant ou moteur arrêté par cette personne suivant que l'identifiant contient en mémoire la première ou la seconde information. La lecture de cette information peut être faite directement sur un écran d'affichage prévu sur l'identifiant ou par l'intermédiaire d'un terminal de lecture sur lequel on vient connecter l'identifiant.

Selon un mode de réalisation particulier du procédé selon l'invention, on enregistre lesdites première et seconde informations dans l'identifiant et dans le véhicule pour prouver une effraction en cas de vol du véhicule. En effet, quand ce véhicule est retrouvé, si celui-ci contient la première information, cela signifie qu'il a été quitté de façon non autorisée par la dernière personne ayant restitué l'identifiant. Au contraire, si celui-ci contient la seconde information, cela signifie que cette dernière personne a quitté normalement le véhicule.

Un exemple de mise en oeuvre du procédé selon l'invention est décrit ci-après en détail et illustré sur les dessins.
La figure 1 montre très schématiquement les éléments d'un système mains libres pour un véhicule automobile.
La figure 2 est un organigramme très simplifié qui illustre la mise en oeuvre du procédé selon l'invention.

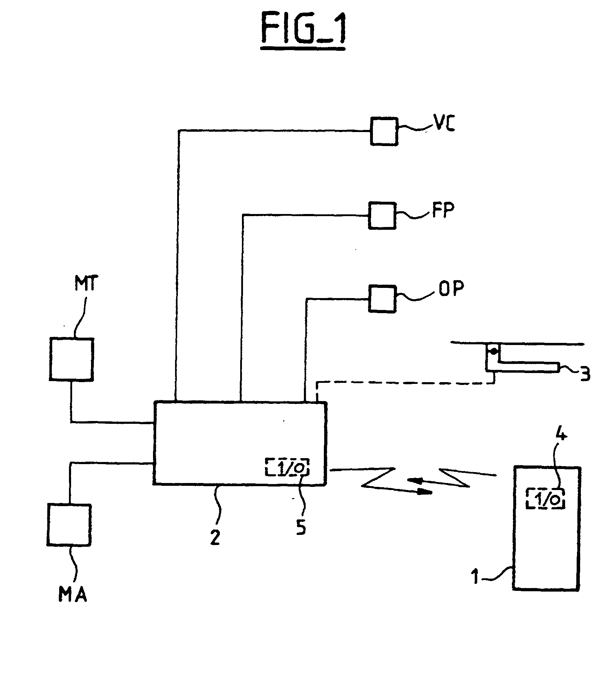

Figure 1, le système d'accès et/ou de démarrage mains libres pour un véhicule automobile comporte classiquement un identifiant portatif 1 destiné à être porté par l'utilisateur autorisé du véhicule et une unité de commande 2 disposée dans le véhicule.

L'identifiant est apte à communiquer sur une certaine distance et sans fil avec l'unité de commande pour être authentifié par celle-ci. Suite à authentification, de façon connue, l'unité 2 commande le déverrouillage des portes du véhicule et/ou autorise le démarrage du moteur du véhicule en libérant par exemple la pompe d'injection de carburant et/ou en déverrouillant la colonne de direction du véhicule. Le processus d'authentification peut être déclenché par exemple par une manoeuvre de poignée de porte 3 sur le véhicule qui interagit sur l'unité 2. Avec un tel système, le démarrage du moteur du véhicule comme l'arrêt normal du moteur se fait en manoeuvrant un bouton. L'unité de commande 2 reçoit généralement de différents capteurs placés sur le véhicule des signaux indicatifs de l'ouverture ou de la fermeture d'une porte du véhicule, de l'état tournant ou arrêté du moteur du véhicule. Ces signaux permettent à l'unité de commande de réaliser les fonctions de commande et de contrôle. Figure 1, on a illustré à titre d'exemples non limitatifs, différents capteurs reliés à l'unité de commande 2 : OP désigne un capteur qui fournit un signal indicatif de l'ouverture d'une porte du véhicule ; FP désigne un capteur qui fournit un signal indicatif de la fermeture d'une porte du véhicule ; VC désigne un capteur qui fournit un signal indicatif du verrouillage de la colonne de direction ; MA désigne un capteur qui fournit un signal indicatif de l'arrêt moteur ; MT désigne un capteur qui fournit un signal indiquant que le moteur est tournant. Ces différents capteurs sont bien connus dans l'état de la technique.

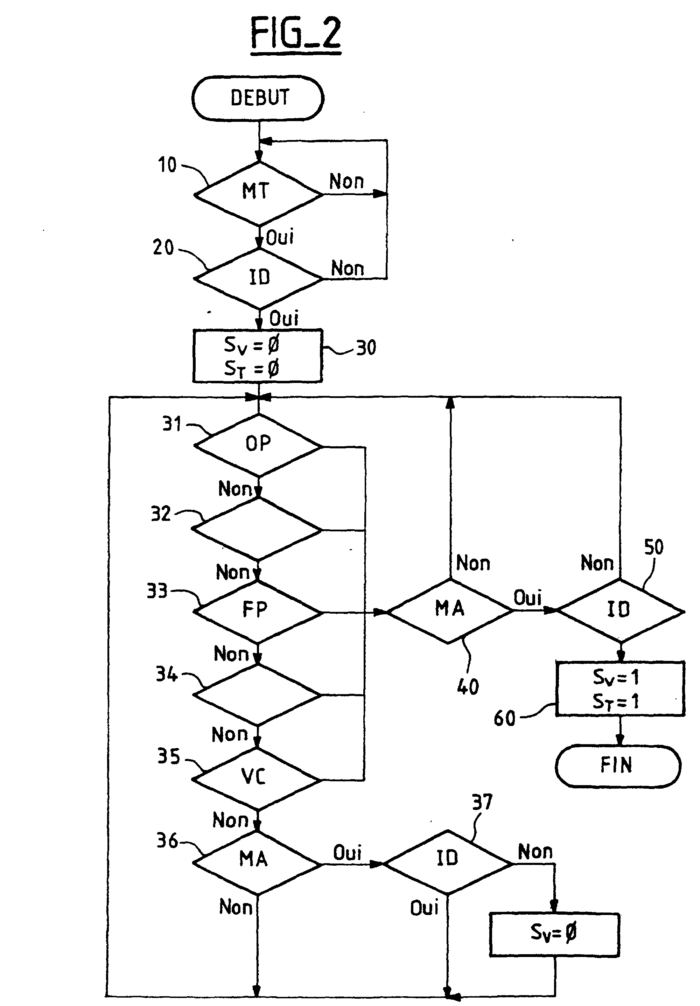

L'identifiant 1 d'un tel système n'est généralement pas prévu pour être rendu solidaire du véhicule roulant comme c'est le cas avec une clé de contact mécanique. Pour pallier cet inconvénient et renforcer la sécurité du système mains libres, l'unité de commande et l'identifiant sont agencés pour dérouler un processus qui est illustré sur la figure 2 et décrit ci-après.

Un porteur autorisé de l'identifiant 1 s'approche du véhicule et manoeuvre par exemple une poignée de porte du véhicule ce qui actionne l'unité de commande 2 dans le véhicule. Après authentification de l'identifiant par l'unité de commande, les portes du véhicule sont déverrouillées et ceci fait débuter le processus de sécurisation du système mains libres. En 10, l'unité de commande 2 attend la détection du démarrage du moteur du véhicule. Dès que l'unité de commande 2 reçoit un signal du capteur MT indiquant que le moteur est tournant, elle établit en 20 une communication ID avec l'identifiant. Si cette communication ne peut pas être établie dans un temps prédéterminé, le processus reprend à l'étape 10. Dans le cas contraire en 30, par l'intermédiaire de la communication entre l'unité de commande 2 et l'identifiant 1, une première information, par exemple 0, est enregistrée dans la mémoire 4 de l'identifiant. Ceci est symbolisé sur la figure 2 par St=0. Parallèlement, la même information peut être enregistrée simultanément ou non dans la mémoire 5 de l'unité de commande. Ceci est symbolisé sur la figure 2 par Sv=0.

Cette première information en mémoire dans l'identifiant et le cas échéant dans le véhicule peut être simplement une donnée à deux états tel qu'un bit de donnée.

Puis en 40, l'unité de commande attend la détection d'un arrêt normal du moteur du véhicule. Par arrêt normal, il faut comprendre un arrêt sollicité par l'intermédiaire du bouton d'arrêt moteur avec présence de l'identifiant dans le véhicule. Dès que l'unité de commande 2 reçoit un signal du capteur MA indiquant que le moteur est arrêté, elle établit en 50 une communication ID avec l'identifiant. Si cette communication ne peut pas être établie dans un temps prédéterminé, le processus reprend juste après l'étape 30. Dans le cas contraire en 60, par l'intermédiaire de la communication entre l'unité de commande 2 et l'identifiant 1, une seconde information, par exemple 1, différente de la première information, est enregistrée dans la mémoire 4 de l'identifiant à la place de la première information. Ceci est symbolisé sur la figure 2 par St=1. Parallèlement, la même information peut être enregistrée dans la mémoire 5 de l'unité de commande. Ceci est symbolisé sur la figure 2 par Sv=1.

Par conséquent, si le porteur de l'identifiant restitue un identifiant dans lequel la seconde information est enregistrée, cela signifie que cette personne a quitté le véhicule de façon autorisée, moteur à l'arrêt. Au contraire, si l'identifiant contient la première information, cela signifie que cette personne a quitté le véhicule, moteur encore en marche ce qui est un cas de fraude.

Pour renforcer encore le processus de sécurisation, l'unité de commande 2 avant d'attendre en 40 la détection de l'arrêt normal du moteur, peut être mise en attente de détection de la réalisation d'une ou plusieurs autres conditions préliminaires. Ainsi, comme visible sur la figure 2, après l'étape 30 et avant l'étape 40, l'unité de commande se met par exemple en attente en 31 de la détection d'une ouverture d'ouvrant par le capteur OP, et/ou en 32 de la détection d'une commande de verrouillage véhicule, et/ou en 33 de la détection d'une fermeture d'un ouvrant par le capteur FP, et/ou en 34 de la détection du verrouillage de la pompe d'injection de carburant, et/ou en 35 de la détection du verrouillage de la colonne de direction par le capteur VC et/ou de la boîte de vitesse du véhicule. Ainsi, la seconde information est enregistrée dans l'identifiant 1 seulement si au moins une condition des étapes 31 à 35 est réalisée, moteur normalement arrêté alors que l'identifiant est dans la zone de communication de l'unité de commande. Il est entendu que la sécurité sera encore plus renforcée si avant l'étape 40, l'unité de commande vérifie que toutes les conditions des étapes 31 à 35 sont vérifiées simultanément.

Par ailleurs, comme illustré sur la figure 2, si aucune des conditions des étapes 31 et 35 n'est réalisée mais que l'unité de commande détecte en 36 par le capteur MA un arrêt moteur et que l'unité de commande détecte en 37 que l'identifiant n'est pas dans la zone de communication ID de l'unité de commande, alors l'unité de commande enregistre dans la mémoire 5 la première information (étape 37) pour limiter encore plus les possibilités de fraude. Ceci est symbolisé sur la figure 2 par Sv=0.

Selon l'invention, lesdites première et seconde information sont enregistrées dans l'identifiant aux étapes 30 et 60 de façon récupérable pour être affichées sur un écran d'affichage prévu sur l'identifiant ou sur un terminal de lecture auquel est connecté l'identifiant. L'écran d'affichage de l'identifiant pourrait être classiquement un petit écran à cristaux liquides.

## Revendications

1. Un procédé pour sécuriser un système d'accès et/ou de démarrage mains libres pour véhicule automobile, le système mains libres comprenant une unité de commande (2) disposée dans le véhicule et un identifiant portatif (1) apte à communiquer à distance et sans fil avec l'unité de commande pour être authentifier, **caractérisé en ce qu'**il consiste à enregistrer (30) une première information dans l'identifiant via une communication avec l'unité de commande en réponse à la détection du démarrage du moteur du véhicule, et à enregistrer (60) une seconde information à la place de la première information dans l'identifiant via une communication avec l'unité de commande en réponse à la détection de l'arrêt normal du moteur du véhicule.

2. Le procédé selon la revendication 1, dans lequel lesdites première et seconde informations sont enregistrées dans le véhicule et dans l'identifiant.

3. Le procédé selon l'une des revendications 1 ou 2, dans lequel ladite seconde information est enregistrée dans l'identifiant et/ou dans le véhicule en réponse à la détection (31) de l'ouverture d'un ouvrant du véhicule alors que le moteur a été normalement arrêté.

4. Le procédé selon l'une des revendications 1 ou 2, dans lequel ladite seconde information est enregistrée dans l'identifiant et/ou dans le véhicule en réponse à la détection (32) d'une condamnation du véhicule alors que le moteur a été normalement arrêté.

5. Le procédé selon l'une des revendications 1 ou 2, dans lequel ladite seconde information est enregistrée dans l'identifiant et/ou dans le véhicule en réponse à la détection (33) de la fermeture d'un ouvrant alors que le moteur a été normalement arrêté.

6. Le procédé selon l'une des revendications 1 ou 2, dans lequel ladite seconde information est enregistrée dans l'identifiant et/ou dans le véhicule en réponse à la détection (34) du verrouillage de l'injection de carburant du véhicule alors que le moteur a été normalement arrêté.

7. Le procédé selon l'une des revendications 1 ou 2, dans lequel ladite seconde information est enregistrée dans l'identifiant et/ou dans le véhicule en réponse à la détection (35) du verrouillage de la colonne de direction du véhicule alors que le moteur a été normalement arrêté.

8. Le procédé selon l'une des revendications 1 ou 2, dans lequel ladite seconde information est enregistrée dans l'identifiant et/ou dans le véhicule en réponse à la détection (35) du verrouillage de la boite de vitesse du véhicule alors que le moteur a été normalement arrêté.

9. Le procédé selon l'une des revendications 1 à 8, dans lequel lesdites première et seconde information sont enregistrées dans l'identifiant de façon récupérable pour être affichées sur un écran d'affichage prévu sur l'identifiant ou sur un terminal de lecture auquel est connecté l'identifiant.

## Patentansprüche

1. Verfahren zum Absichern eines Freihandzugangs- und/oder Startsystems für ein Kraftfahrzeug, wobei das Freihandsystem eine Steuereinheit (2) enthält, die im Fahrzeug angeordnet ist, sowie einen tragbaren Identifizierer (1), der über eine Entfernung drahtlos mit der Steuereinheit kommunizieren kann, um authentifiziert zu werden, **dadurch gekennzeichnet, dass** es darin besteht, durch Kommunikation mit der Steuereinheit eine erste Information im Identifizierer in Antwort auf die Erfassung des Fahrzeugmotorstarts aufzuzeichnen (30), und durch Kommunikation mit der Steuereinheit in Antwort auf die Erfassung des normalen Abstellens des Fahrzeugmotors eine zweite Information anstatt der ersten Information im Identifizierer aufzuzeichnen (60).

2. Verfahren nach Anspruch 1, wobei die erste und die zweite Information im Fahrzeug und im Identifizierer aufgezeichnet werden.

3. Verfahren nach Anspruch 1 oder 2, wobei die zweite Information im Identifizierer und/oder im Fahrzeug in Antwort auf die Erfassung (31) des Öffnens einer Fahrzeugtür bei normal abgestelltem Motor aufgezeichnet wird.

4. Verfahren nach Anspruch 1 oder 2, wobei die zweite Information im Identifizierer und/oder im Fahrzeug in Antwort auf die Erfassung (32) einer Verriegelung des Fahrzeugs bei normal abgestelltem Motor aufgezeichnet wird.

5. Verfahren nach Anspruch 1 oder 2, wobei die zweite Information im Identifizierer und/oder im Fahrzeug in Antwort auf die Erfassung (33) des Schließens einer Tür bei normal abgestelltem Motor aufgezeichnet wird.

6. Verfahren nach Anspruch 1 oder 2, wobei die zweite Information im Identifizierer und/oder im Fahrzeug in Antwort auf die Erfassung (34) des Sperrens der Kraftstoffeinspritzung des Fahrzeugs bei normal abgestelltem Motor aufgezeichnet wird.

7. Verfahren nach Anspruch 1 oder 2, wobei die zweite Information im Identifizierer und/oder im Fahrzeug in Antwort auf die Erfassung (35) des Sperrens der Lenksäule des Fahrzeugs bei normal abgestelltem Motor aufgezeichnet wird.

8. Verfahren nach Anspruch 1 oder 2, wobei die zweite Information im Identifizierer und/oder im Fahrzeug in Antwort auf die Erfassung (35) des Sperrens des Fahrzeuggetriebes bei normal abgestelltem Motor aufgezeichnet wird.

9. Verfahren nach einem der Ansprüche 1 bis 8, wobei die erste und die zweite Information im Identifizierer in wiederherstellbarer Weise aufgezeichnet werden, um an einem am Identifizierer vorgesehenen Anzeigeschirm oder an einem Ableseterminal angezeigt zu werden, mit dem der Identifizierer verbunden ist.

## Claims

1. A method for providing security in a hands-free access and/or starting system for a motor vehicle, the hands-free system comprising a control unit (2) disposed in the vehicle, together with a portable identifier (1) which is adapted for remote wireless communication with the control unit whereby to be authenticated, **characterised in that** it consists in recording (30) a first item of information in the identifier via a communication with the control unit in response to detection of starting of the engine of the vehicle, and in recording (60) a second item of information in place of the first item of information in the identifier via a communication with the control unit in response to detection of normal arrest of the engine of the vehicle.

2. The method according to Claim 1 in which the said first and second items of information are recorded in the vehicle and in the identifier.

3. The method according to Claim 1 or Claim 2, wherein the said second item of information is recorded in the identifier and/or in the vehicle in response to detection (31) that an openable element of the vehicle has opened and that the engine has been arrested normally.

4. The method according to Claim 1 or Claim 2, wherein the said second item of information is recorded in the identifier and/or in the vehicle in response to the detection (32) that the vehicle has been locked and that the engine has been arrested normally.

5. The method according to Claim 1 or Claim 2, wherein the said second item of information is recorded in the identifier and/or in the vehicle in response to the detection (33) that an openable element has been closed and that the engine has been arrested normally.

6. The method according to Claim 1 or Claim 2, wherein the said second item of information is recorded in the identifier and/or in the vehicle in response to the detection (34) that the fuel injection system of the vehicle has been locked and that the engine has been arrested normally.

7. The method according to Claim 1 or Claim 2, wherein the said second item of information is recorded in the identifier and/or in the vehicle in response to the detection (35) that the steering column of the vehicle has been locked and that the engine has been arrested normally.

8. The method according to Claim 1 or Claim 2, wherein the said second item of information is recorded in the identifier and/or in the vehicle in response to detection (35) that the gearbox of the vehicle has been locked and that the engine has been arrested normally.

9. The method according to one of Claims 1 to 8, wherein the said first and second items of information are recorded in the identifier in a recoverable manner, whereby they can be displayed on a display screen arranged on the identifier or on a reading terminal to which the identifier is connected.
